**Europäisches Patentamt**

**European Patent Office**

**Office européen des brevets**

(19)

(11) Veröffentlichungsnummer: **0 257 198**
**A2**

# (12) EUROPÄISCHE PATENTANMELDUNG

(21) Anmeldenummer: **87107128.8**

(22) Anmeldetag: **16.05.87**

(51) Int. Cl.⁴: **H 04 N 5/32**

(30) Priorität: **14.08.86 DE 3627669**
**21.02.87 DE 3705605**

(43) Veröffentlichungstag der Anmeldung: **02.03.88**
**Patentblatt 88/9**

(84) Benannte Vertragsstaaten: **DE FR GB IT**

(71) Anmelder: **Sauerwein, Kurt, Dr., Bergische Strasse 16,
D-5657 Haan 1 (DE)**

(72) Erfinder: **Sauerwein, Kurt, Dr., Kattendahl 7,
D-4006 Erkrath (DE)**
Erfinder: **Link, Rainer, Dr., Buchenhöhe 1,
D-5014 Kerpen-Horrem (DE)**
Erfinder: **Nuding, Wolfgang, Dr., Am Gerstenkamp 8,
D-5210 Troisdorf (DE)**
Erfinder: **Gottwald, Hans Reinhard, Teichstrasse 60,
D-4010 Hilden (DE)**

(74) Vertreter: **König, Reimar, Dr.-Ing. et al, Patentanwälte
Dr.-Ing. Reimar König Dipl.-Ing. Klaus Bergen
Wilhelm-Tell-Strasse 14 Postfach 260162,
D-4000 Düsseldorf 1 (DE)**

(54) Verfahren und Vorrichtung zum Verbessern der Qualität von Durchstrahlungsbildern.

(57) Zur Verbesserung der Bildqualität von Durchstrahlungsbildern (10) beim zerstörungsfreien Werkstoffprüfen wird mittels einer Strahlenquelle (1) ein Durchstrahlungsbild (10) erzeugt, durch elektronische Bildsensoren aufgenommen, in einen Bildverarbeitungsrechner (15) eingespeist und auf einem Bildschirm (21) abgebildet, das sich aus einem ersten Durchstrahlungsbild (10) und einem zweiten, gegenüber dem ersten Durchstrahlungsbild (10) geringfügig verschobenen und davon subtrahierten Differenzdurchstrahlungsbild ergibt, so dass sich aus der Strahlenquelle (1) oder dem Bildaufnahmegerät (11) ergebende Fehler und Störungen eliminieren lassen.

EP 0 257 198 A2

Dr.-Ing. Reimar König · Dipl.-Ing. Klaus Bergen

Wilhelm-Tell-Str. 14   4000 Düsseldorf 1   Telefon 39 70 26   Patentanwälte

00257198

- 1 -          37 090 K

Herr Dr. Kurt Sauerwein, Bergische Straße 16,
================================================
5657 Haan/Rheinld. 1
=====================

## "Verfahren und Vorrichtung zum Verbessern der Qualität von Durchstrahlungsbildern"

Die Erfindung betrifft ein Verfahren und eine Vorrichtung zum Verbessern der Qualität von Durchstrahlungsbildern bei der zerstörungsfreien Prüfung von Gegenständen, bei denen mittels einer Strahlenquelle ein Durchstrahlungsbild erzeugt, durch elektronische Bildsensoren aufgenommen, in einen Bildverarbeitungsrechner eingespeist und auf einem Bildschirm abgebildet wird.

Als Strahlenquelle dienen in den meisten Fällen Röntgenröhren. Dabei wird ein Elektronenstrahl in einem starken elektrischen Feld beschleunigt und trifft auf eine Anode, die die Elektronen abbremst. Die dabei entstehende Bremsstrahlung ist die Nutzstrahlung der Röntgenröhre. Der durchstrahlte Gegenstand, beispielsweise ein Werkstück, wird auf einem Bildsensor, beispielsweise einen Röntgegenbildwandler abgebildet und das Durchstrahlungsbild in eine Bildverarbeitungsanlage eingezogen und aufbereitet. Durchstrahlungsbilder, die mit Röntgenbildverstärkern aufgenommen werden, zeigen mehr oder weniger ausgeprägte Störungen durch Fehler in der Fernsehkamera oder durch Inhomogenitäten im Eingangsschirm des Bildwandlers, die sich außer durch Flecken durch

BAD ORIGIN'

00257198

eine Struktur bemerkbar machen, die wie Rauschen im Bild aussieht, aber nicht wie echtes Rauschen statistisch verteilt ist und sich somit auch nicht durch längere Belichtungszeiten reduzieren läßt. Aufgrund dieser Störungen lassen sich feine Details mit der bekannten Aufnahmetechnik nicht sichtbar machen.

Der Erfindung liegt die Aufgabe zugrunde, ein Verfahren und eine Vorrichtung der eingangs erwähnten Art zu schaffen, mit denen sich unter Vermeidung der Nachteile der bekannten Verfahren und Vorrichtungen die Qualität von Durchstrahlungsbildern wesentlich verbessern läßt.

Gelöst wird diese Aufgabe mit einem Verfahren, bei dem ein erstes Durchstrahlungsbild aufgenommen und gespeichert, anschließend ein gegenüber dem ersten Durchstrahlungsbild geringfügig verändertes zweites Durchstrahlungsbild aufgenommen und gespeichert, die beiden Durchstrahlungsbilder voneinander subtrahiert und das Differenzbild auf dem Bildschirm abgebildet wird. Die Veränderung kann z.B. aus einer Verschiebung bestehen, die gegenüber dem ersten Durchstrahlungsbild mindestens einem Bildpunkt im Fernsehraster entspricht. Staubkörner, Flecken oder andere Störungen, die von der Strahlenquelle oder dem Bildsensor herrühren, verbleiben an der gleichen Stelle im Bild und werden daher durch die Bildsubtraktion eliminiert. Details des Werkstücks werden mit einer Kantenverstärkung wiedergegeben, so daß bei Benutzung der in der DIN-gerechten Bildgüteprüfkörper die Detailqualität der Aufnahme um ein bis zwei Bildgütezahlen steigt.

Zum Erzeugen des zweiten, verschobenen Durchstrahlungsbildes läßt sich entweder die Strahlenquelle oder aber der zu prüfende Gegenstand geringfügig verschieben.

Vorzugsweise wird bei Verwendung einer Röntgenröhre als Strahlenquelle zum Erzeugen des zweiten Durchstrahlungsbildes der die Röntgenstrahlen erzeugende Elektronenstrahl geringfügig abgelenkt. Auf diese Weise wandert der Brennfleck auf der Anode etwas zur Seite, so daß das zweite Durchstrahlungsbild unter einem etwas anderen Blickwinkel entsteht. Es ist jedoch noch möglich, zum Erzeugen des zweiten Durchstrahlungsbildes den Brennfleck der Röntgenröhre zu vergrößern.

Wichtig ist, daß bei dem erfindungsgemäßen Verfahren zwei Bilder aufgenommen und voneinander subtrahiert werden, so daß die bei einer üblichen Radiographie durch Änderung der Brennflecklage eintretende Bildqualitätsverschlechterung in Form unscharfer Abbildungen nicht auftritt.

Durch das erfindungsgemäße Verfahren werden großflächige Einzelheiten, bei denen die Differenz der Grauwerte benachbarter Pixel gering ist, aus dem Bild entfernt, während feine Details wie Kanten, Risse, Lunker usw. deutlicher werden.

Einer Vorrichtung zur Durchführung des Verfahrens mit einer Strahlenquelle, einem Bildsensor, einem Bildverarbeitungsrechner und einem Bildschirm zum Abbilden des Durchstrahlungsbildes weist erfindungsgemäß zwei elektronische Bildspeicher und eine, eine Strahlablenk- oder Strahlfokussier- bzw. Strahlverschiebeeinheit und eine einen Umschalter für die Bildspeicher betätigende Steuerung auf. Besteht die Strahlenquelle aus einer Röntgenröhre, wirkt die Strahlablenk- bzw. Strahlfokussiereinheit auf den die Röntgenstrahlen erzeugenden Elektronenstrahl und arbeitet vorzugsweise elektromagnetisch.

Vorzugsweise besteht die Vorrichtung aus einem Bildwandler für die Röntgenstrahlen mit nachgeschalteter Fernsehkamera, einem Analog/Digital-Wandler, einem Umschalter, zwei digitalen Bildspeichern, einer Steuereinheit für die Strahlablenk- bzw. Strahlfokussiereinheit und den Umschalter, einem Bildverarbeitungsrechner, einem Differenzbildrechner, einem Digital/Analog- Wandler und einem Bildschirm.

Ein Rechner ermöglicht es, die ganze Folge aus dem ersten Bildeinzug, dem zweiten Bildeinzug, jeweils in Echtzeit oder mit einer Bildintegration, der Brennfleckverschiebung bzw. -vergrößerung durch Einschalten der elektromagnetischen Strahlablenk- bzw. Strahlfokussiereinheit, Bildsubtraktion und -normierung unter identischen Aufnahmebedingungen automatisch ablaufen zu lassen, und durch den Benutzer durch einen einzigen Befehl auszulösen.

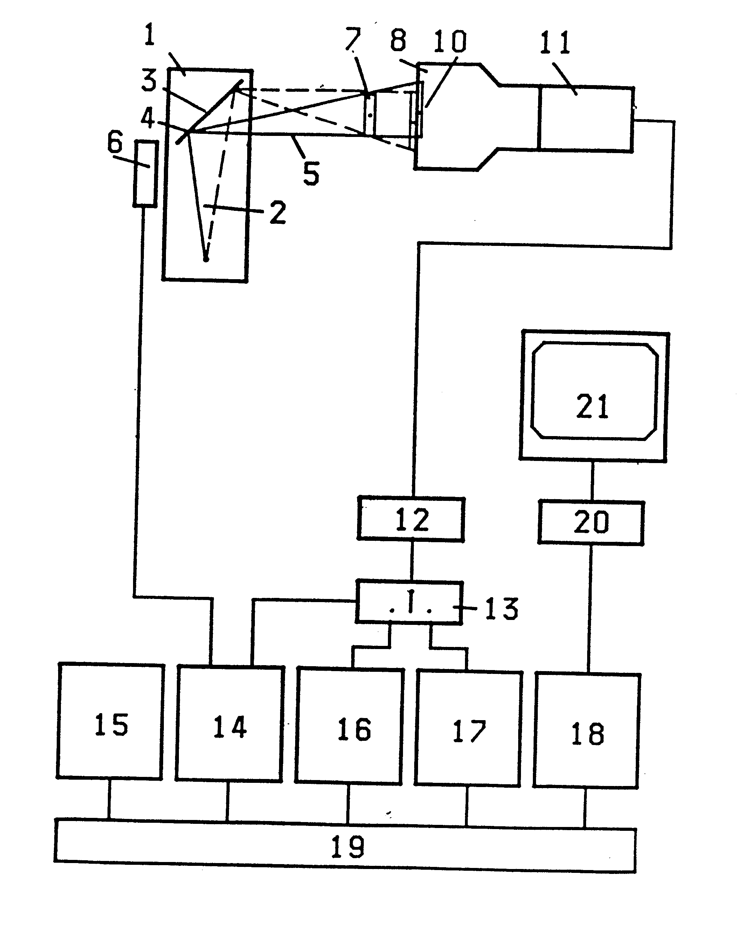

Die Erfindung wird nachfolgend anhand eines in der Zeichnung als Blockdarstellung wiedergegebenen Ausführungsbeispiels des näheren erläutert.

In einer Röntgenröhre 1 wird ein Elektronenstrahl 2 auf die Anode 3 gerichtet und erzeugt im Brennfleck 4 einen Röntgenstrahl 5. Je nachdem ob eine Ablenk- bzw. Fokussiereinheit in Form eines Elektromagneten 6 ein- oder ausgeschaltet ist, verlagert bzw. vergrößert sich der Brennfleck 4 auf der Anode 3, wie das mit voll ausgezogenen und unterbrochenen Linien dargestellt ist.

Der Röntgenstrahl 5 durchstrahlt einen Prüfkörper 7 und erzeugt in einem Bildwandler 8 ein Durchstrahlungsbild 10. Das durch die voll ausgezogenen Linien des Röntgenstrahls 5 erzeugte Durchstrahlungsbild 10 und das durch die unterbrochenen Linien erzeugte zweite Durchstrahlungsbild sind gegeneinander um einen oder mehrere Bildpunkte verschoben.

Die Durchstrahlungsbilder 10 werden durch ein Bildaufnahmegerät 11, beispielsweise eine Fernsehkamera in elektrische Signale umgewandelt und über einen Analog/Digital-Wandler 12 und einem Umschalter 13 je einem Speicher 16 und 17 zugeleitet. Eine Steuereinheit 14 steuert den Ablenk- bzw. Fokussiermagneten 6 und den Umschalter 13 an, um das erste Durchstrahlungsbild im Speicher 16 und das geringfügig verschobene bzw. vergrößerte zweite Durchstrahlungsbild im Speicher 17 zu speichern.

Ein als Bildverarbeitungsrechner ausgebildeter zentraler Rechner 15 ist über einen Rechner-Bus 19 mit der Steuereinheit 14, den Speichern 16, 17 und einem Differenzbildrechner 18 verbunden und steuert den gesamten Ablauf.

Der Differenzbildrechner 18 besitzt ein besonderes Rechenwerk, das sehr schnell logische Verknüpfungen wie Addition und Subtraktion zweier Größen durchzuführen; er ist in der Lage, in 1/25 sec. die Differenz von 512 x 512 einander entsprechenden Bildpunkten in den Speichern 16 und 17 zu berechnen. Diese Geschwindigkeit ist erforderlich, da die Fernsehnorm mit 25 Bildwechseln je Sekunde arbeitet.

Die im Differenzbildrechner 18 erzeugten digitalen Bildsignale werden in einem Digital/Analog-Wandler 20 in ein Analogsignal zurückverwandelt und als Differenzdurchstrahlungsbild auf einem Bildschirm 21 abgebildet.

00257198

- 7 -

Herr Dr. Kurt Sauerwein, Bergische Straße 16,
==================================================
5657 Haan/Rheinld. 1
=======================

"Verfahren und Vorrichtung zum Verbessern der
Qualität von Durchstrahlungsbildern"

Patentansprüche:

1. Verfahren zum Verbessern der Qualität von Durchstrahlungsbildern beim zerstörungsfreien Prüfen von Gegenständen, insbesondere Werkstücken, bei dem mittels einer Strahlenquelle ein Durchstrahlungsbild erzeugt, durch elektronische Bildsensoren aufgenommen, in einem Bildverarbeitungsrechner eingespeist und auf einem Bildschirm abgebildet wird, dadurch gekennzeichnet, daß ein erstes Durchstrahlungsbild aufgenommen und gespeichert, anschließend ein gegenüber dem ersten Durchstrahlungsbild geringfügig verändertes zweites Durchstrahlungsbild aufgenommen und gespeichert, die beiden Durchstrahlungsbilder voneinander subtrahiert und das Differenzbild auf dem Bildschirm abgebildet werden.

2. Verfahren nach Anspruch 1, dadurch gekennzeichnet, daß die Strahlenquelle geringfügig verschoben wird.

BAD ORIGINAL

3. Verfahren nach Anspruch 1, dadurch gekennzeichnet, daß der zu prüfende Gegenstand geringfügig verschoben wird.

4. Verfahren nach Anspruch 1, dadurch gekennzeichnet, daß der die Röntgenstrahlen erzeugende Elektronenstrahl geringfügig abgelenkt wird.

5. Verfahren nach Anspruch 1, dadurch gekennzeichnet, daß bei Verwendung einer Röntgenröhre als Strahlenquelle zum Erzeugen des zweiten Durchstrahlungsbildes der die Röntgenstrahlen erzeugende, durch den Elektronenstrahl hervorgerufene Brennfleck geringfügig vergrößert wird.

6. Vorrichtung zur Durchführung des Verfahrens nach den Ansprüchen 1 bis 5, mit einer Strahlenquelle, einem Bildsensor, einem Bildverarbeitungsrechner und einem Bildschirm zum Abbilden des Durchstrahlungsbildes, gekennzeichnet durch zwei elektronische Bildspeicher (16, 17) und eine, eine Strahlablenk- oder Strahlfokussier- bzw. Strahlverschiebungseinheit (6) und einen Umschalter (13) für die Bildspeicher (16, 17) betätigende Steuereinheit (14).

7. Vorrichtung nach Anspruch 6, dadurch gekennzeichnet, daß die Strahlenquelle aus einer Röntgenröhre (1) besteht und die Strahlenablenk- bzw. Strahlenfokussiereinheit (6) auf den die Röntgenstrahlen (5) erzeugenden Elektronenstrahl (2) wirkt.

8. Vorrichtung nach Anspruch 7, gekennzeichnet durch einen Bildwandler (8) für die Röntgenstrahlen (5) mit nachgeschalteter Fernsehkamera (11), einen Analog/Digital-Wandler (12), einen Umschalter (13), zwei digitale Bildspeicher (16, 17), eine Steuereinheit (14) für die Strahlenablenk- bzw. Strahlenfokussiereinheit (6) und den Umschalter (13), einen Bildverarbeitungsrechner (15), einen Differenzbildrechner (18), einen Digital/Analog-Wandler (20) und einen Bildschirm (21).

9. Vorrichtung nach Anspruch 7 oder 8, <u>gekennzeichnet durch</u> eine elektromagnetische Strahlenablenk- bzw. Strahlenfokussiereinheit (6).